# EUROPEAN PATENT APPLICATION

(11) **EP 4 582 312 A1**
(43) Date of publication of application: **09.07.2025**
(21) Application number: 24216477.0
(22) Date of filing: 29.11.2024
(51) Int. Cl.: B60R 13/02, B60R 21/04

(54) **MOTOR VEHICLE PASSENGER COMPARTMENT WITH PILLARS PROVIDED WITH COVERING ELEMENTS FOR ABSORBING IMPACTS**

(30) Priority: 01.12.2023 IT 202300025707
(71) Applicant: FERRARI S.p.A., 41100 Modena (IT)
(72) Inventor: FERETTI, Manuel, 41100 MODENA (IT)
(74) Representative: Studio Torta S.p.A.

(57) **Abstract**

A motor vehicle (1) has a passenger compartment (2) with a plurality of pillars (6), each provided with a respective covering element (11) having an outer surface (14) delimiting the passenger compartment (2); the covering elements (11) have a skeleton (13), which is defined by a single piece of polymer material and includes a wall (15) spaced apart from the corresponding pillar (6), so as to define a cavity (19), and a plurality of ribs (17) projecting from said wall (15) towards the pillar (6); at least some of the ribs (17) have respective reduced thickness portions (20a), each with a thickness ranging from 25% to 75% with respect to a maximum thickness of the respective rib (17).

## Description

### CROSS-REFERENCE TO RELATED APPLICATIONS

This patent application claims priority from Italian patent application no. 102023000025707 filed on December 1st, 2023, the entire disclosure of which is incorporated herein by reference.

### TECHNICAL FIELD

The invention relates to a motor vehicle passenger compartment with pillars that are provided with covering elements having characteristics such as to absorb impacts, in the event of an impact by the head of a person occupying, in use, said passenger compartment.

### PRIOR ART

When dealing with finishing and/or covering elements that are available inside a motor vehicle passenger compartment, these elements must meet different requirements, not only in terms of aesthetic features and structural features (relating, for example, to elasticity/flexibility, resistance, thermal expansions, etc.), but also in terms of properties that allow energy to be absorbed energy in the event of impacts in case of accidents. The need to absorb impacts is particularly felt for the pillars that support the roof of the motor vehicle, because they can be subjected to impacts of the head of the people who occupy the seats in the passenger compartment, even with relatively high forces, during accidents.

To this regard, US regulations set relatively strict requirements. In these cases, for the evaluation of the impact absorption requirements, there is a criterion called HIC ("Head Injury Criterion"), namely a biomechanical parameter that is proportional to the deceleration of the head during the impact and that must not exceed the value of 1000 according to current US regulations.

In order to try and meet this requirement, some solutions provide for an empty space between the inner surface of the covering element and the rigid part of the pillar that is covered. This empty space, in practice, guarantees a certain range of displacement of the covering element, which deforms towards the rigid part of the pillar during the impact by the head. In other words, this space, combined with the deformation of the material of the covering element, tends to limit the decelerations of the head within acceptable values before meeting the rigid part of the pillar.

Known solutions of the type described above need to be improved, so as to still comply with the aforementioned regulations, but limiting the amount of empty space to be provided between the rigid part of the pillar and the covering element as much as possible, so as to create solutions that are not bulky (especially so as not to limit the visibility of the driver through windshield and side windows) and do not compromise the aesthetic characteristics of the passenger compartment. In this perspective, for example, the possible addition of metal components with a certain elasticity between the rigid part of the pillar and the covering element can improve the absorption of impacts, but would not be able to achieve the objective of reducing the overall dimensions.

In addition, there is a need to provide a solution that is relatively light and is relatively simple to manufacture.

### SUMMARY OF THE INVENTION

Therefore, object of the invention is to provide a motor vehicle with a passenger compartment that is able to fulfil the needs discussed above in a simple and economic manner.

According to the invention, there is provided a motor vehicle as defined in claim 1. The dependent claims define specific embodiments of the invention.

### BRIEF DESCRIPTION OF THE DRAWINGS

The invention will now be described with reference to the accompanying drawings, which show a non-limiting embodiment thereof, wherein:
- figure 1 shows, in perspective and in a partial manner, a preferred embodiment of a passenger compartment of a motor vehicle according to the invention;
- figure 2 is a perspective, on a larger scale, showing a covering element located in the passenger compartment along a pillar of the motor vehicle in figure 1; and
- figures 3 to 10 are cross sections obtained by means of a section plane identified by line III-III in figure 2 and show, on a larger scale, several possible alternatives for the covering element, according to the invention.

### DETAILED DESCRIPTION OF PREFERRED EMBODIMENTS OF THE INVENTION

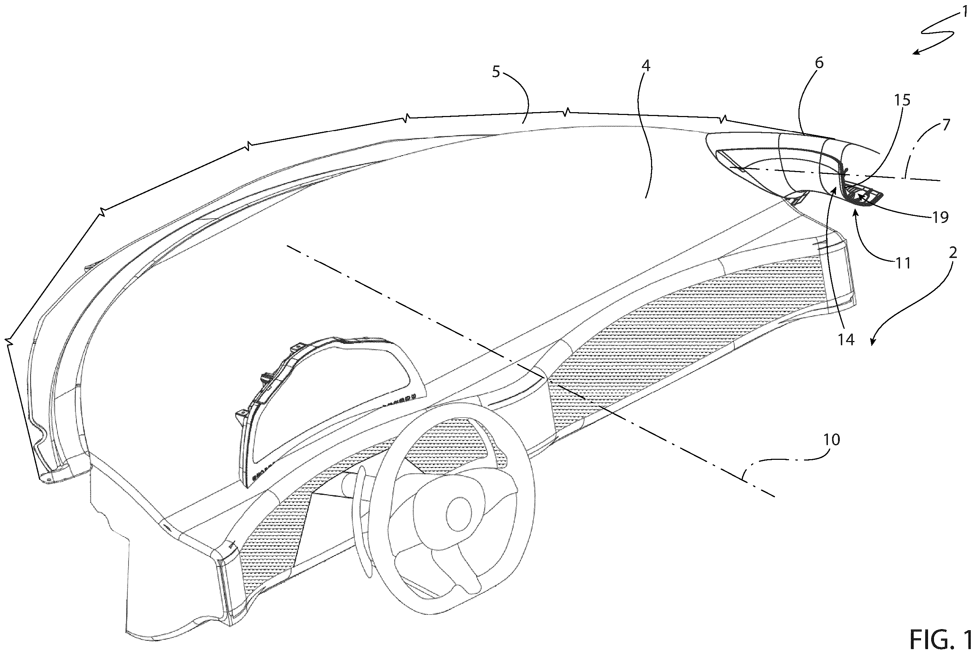

In figure 1, reference number 1 is used to indicate, as a whole, a motor vehicle (partially shown). The motor vehicle 1 comprises a passenger compartment 2 having a driver's seat and at least one passenger's seat (nor shown). The passenger compartment 2 is delimited at the front by a dashboard 4 and by a windshield 5, which is arranged above the dashboard 4 and between two front pillars 6, only one of them being shown for the sake of simplicity. The front pillars 6 extend upwards along respective axes 7, starting from side ends of the dashboard 4, and constitute part of a frame or body of the motor vehicle 1, made of a rigid material, for example a metal material.

The passenger compartment 2 is delimited at the top by a roof, not shown, which is supported by the front pillars 6 and by other pillars of the body, not shown, arranged further back in the passenger compartment 2, considering a longitudinal direction 10 coinciding with the normal direction of travel of the motor vehicle 1. Generally speaking, the front pillars 6 are designated "A-pillars", whereas the other pillars are progressively designated as "B-pillars", "C-pillars", etc. based on their position along the longitudinal direction 10.

Incidentally, it should be noted that, in this description, the terms "at the front", "at the back", "behind", "in front of", "front" "rear", etc. are used with reference to the normal direction of travel along the longitudinal direction 10.

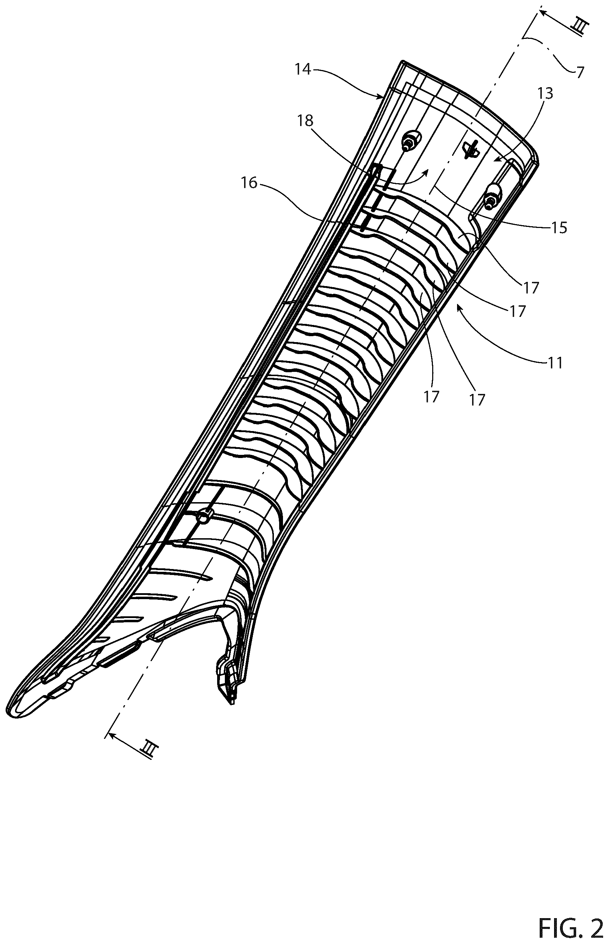

Towards the passenger compartment 2, the pillars are covered by respective covering elements, one of which is shown in figure 2 and is indicated by reference number 11. This description makes reference to this figure and to the corresponding front pillar 6, provided that the same considerations also apply to the other pillars and to the corresponding covering elements.

The covering element 11 comprises a skeleton 13, which is made of a plastic material and is fixed to the front pillar 6 in a known manner not described in detail (for example, with a snap coupling defined by attachment pins that are carried by the skeleton 13 itself).

The covering element 11 has an outer surface 14, which directly delimits the passenger compartment 2: the outer surface 14 can be defined by a wall 15 of the skeleton 13 or consist of an outer finishing layer 16, which covers the wall 15, is fixed with respect to the latter and, for example, has aesthetic characteristics such as to respect the style chosen for the passenger compartment 2. By way of example, the outer finishing layer 16 can also be defined by a so-called "imitation leather" wrapped around the edges of the wall 15.

The skeleton 13 consists of a single piece, obtained through injection moulding of a polymer material, for example a thermoplastic material or a polyurethane material, and comprises, in addition to the wall 15, a plurality of ribs 17 that directly protrude from an inner surface 18 of the wall 15, opposite the outer surface 14. Therefore, the inner surface 18 faces the corresponding front pillar 6 and is spaced apart from the latter, so as to define a cavity 19 (figure 1) between the front pillar 6 and the wall 15.

Preferably, though not necessarily, the cavity 19 is engaged only by the ribs 17, without metal elements and/or foams between the wall 15 and the front pillar 6.

The skeleton 13 has an oblong shape along a direction that is substantially parallel to the axis 7, in which the front pillar 6 extends (and, for example, covers the latter for its entire height). The ribs 17 are flat and lie on respective planes that are transverse to the outer surface of the front pillar 6; in particular, the planes on which the ribs 17 lie are parallel to one another and substantially orthogonal to the axis 7 and/or to the wall 15.

To guarantee a suitable absorption of energy in the event of an impact against the outer surface 14 by the head of a person occupying the passenger compartment 2, according to the invention, at least some of the ribs 17 have a reduction in thickness ranging from 25% to 75% of the maximum thickness, so as to generate a weakening that facilitates the breaking of the ribs 17 themselves and/or their separation from the wall 15. In particular, this maximum thickness ranges from 1 to 2 mm, for example is 1.2 mm.

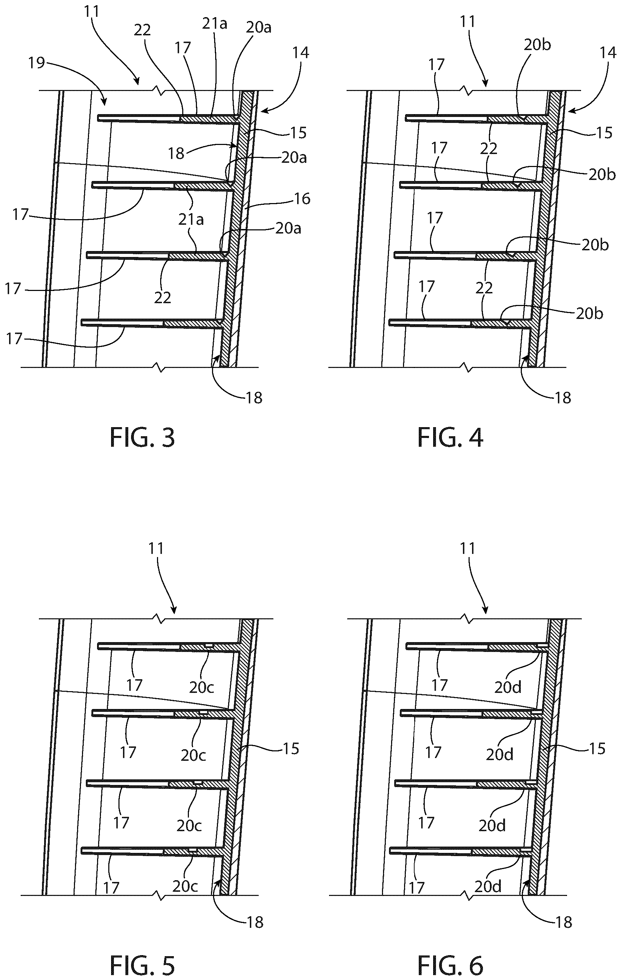

Figures 3 to 10 show different examples of thickness reductions, visible by sectioning the ribs 17 with a section plane that is orthogonal to the wall 15 and to the ribs 17: in other words, the ribs 17 comprise respective reduced thickness portions that are indicated by reference number 20a, 20b, 20c, etc., respectively (not shown in figure 2 for the sake of simplicity). The reduced thickness portions extend over the entire width of the ribs 17, namely along the entire wall 15 and are therefore identifiable regardless of the exact position of the section plane with which the covering element 11 is sectioned.

In particular, in figure 3, the reduced thickness portions 20a are provided with a V-shaped notch and are located close to the inner surface 18, namely at an area where the ribs 17 are attached to the wall 15, so as to determine a break in this area. The remaining portion of each rib 17 is indicated by reference 21a and has a constant thickness or has a thickness that decreases with a very slight, practically negligible slope, going from the portions 20a towards an end edge 22 of the ribs 17 (for example, to facilitate the unmolding of the ribs 17 from the mould during the production of the covering element 11): the end edge 22 is spaced apart from the surface 18, is adjacent to the outer surface of the pillar 6 and, in particular, is in contact with said outer surface.

The solution shown in figure 4 differs from that of figure 3 in that the reduced thickness portions 20b are located at an intermediate area of the ribs 17, between the inner surface 18 of the wall 15 and the end edges 22 of the ribs 17.

The solution of figure 5 differs from that of figure 4 because of the fact that the reduced thickness portions 20c have a U-shaped notch and not a V-shaped notch.

The solution of figure 6 differs from that of figure 5 due to the position of the reduced thickness portions 20d, which are close to the inner surface 18, as in the solution of figure 3.

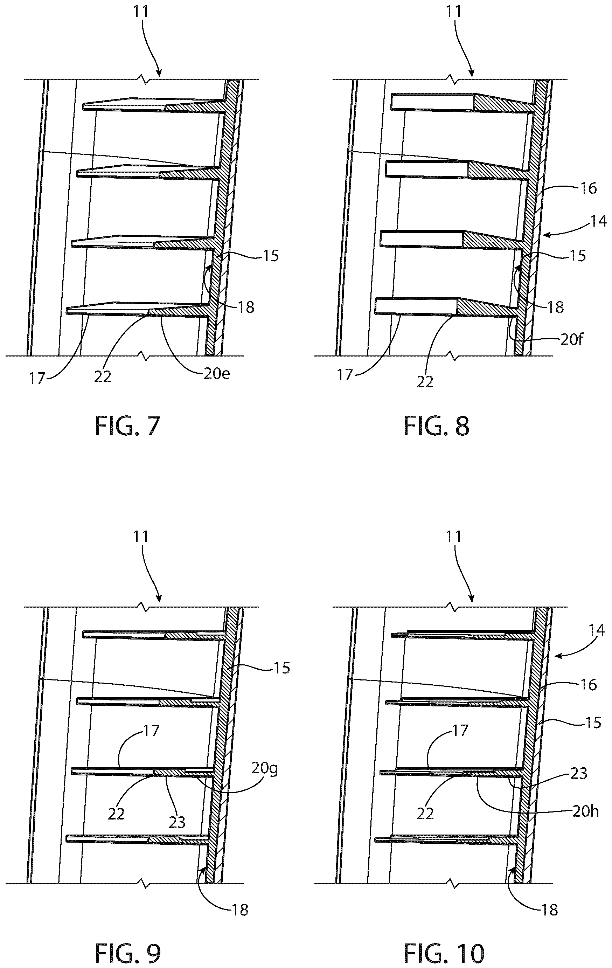

In figure 7, the thickness reduction of the ribs 17 is progressive, with a continuous slope, considering moving along a direction that is substantially orthogonal to the inner surface 18 and to the outer surface of the pillar 6; and, preferably, the thickness reduction of the ribs 17 begins from the inner surface 18 and then ends at the end edges 22. In other words, the zones of the ribs 17 at the end edges 22 define respective reduced thickness portions 20e, with respect to the areas of attachment to the surface 18, where the ribs 17 have a maximum thickness.

The solution of figure 8 differs from that of figure 7 due to the orientation of the slope that defines the reduction of thickness: the areas of attachment to the surface 18 define respective reduced thickness portions 20f, whereas at the end edges 22 the thickness is maximum.

In figures 9 and 10, each one of the ribs 17 consists of a reduced thickness portion 20g, 20h and of a greater thickness portion 23. The thickness of each portion 20g, 20h, 23 is substantially constant. In figure 9, the portion 20g is located close to the inner surface 18, whereas the portion 23 ends at the end edge 22. In figure 10 the configuration is reversed, whereby the portion 20h is located at the end edge 22.

From the examples shown by way of example, it should be evident that the shape of the ribs 17 in cross section can be chosen from a number of options to obtain reduced thickness portions. Thanks to the latter, as mentioned above, the ribs 17 break relatively easily (or, at most, bend with plastic deformation), in the event of an impact of a person's head against the outer surface 14. In particular, this impact causes the wall 15 to shift closer to the outer surface of the front pillar 6, thus leading to a tip compression acting upon the ribs 17 (between the wall 15 and the front pillar 6): the reduction in thickness causes a weakening, preferably of a localised type, to facilitate the breaking.

This breaking increases the absorption of energy during the impact by the ribs 17, compared to known solutions that do not have thickness reductions. At the same time, the broken parts of the ribs 17 remain inside the cavity 19, which is preferably empty, without being dispersed in the passenger compartment 2. In particular, the crushed parts can easily descend towards the lower part of the cavity 19, by gravity. Furthermore, the crushed parts in the cavity 19 can offer an additional resistance to the movement of the wall 15 towards the front pillar 6, thus offering an additional absorption of energy during the impact.

As mentioned above, the shape to be assigned to the ribs 17 to obtain the reduced thickness portions can be different: it will be chosen so as to obtain the highest possible energy absorption, based on the results of simulations and/or experimental tests that also take into account the materials used, the shapes of the wall 15 and of the pillar and the distance of the wall 15 from the pillar (and, hence, the width of the cavity 19).

From the productive point of view, if the reduced thickness portions (20a-20d, for example) define an undercut, in order to obtain the thickness reduction during injection moulding, it is possible to adopt sacrificial cores, according to techniques that are known in this field.

Owing to the above, it is evident that the covering element 11 improves known solutions, from the point of view of the absorption of the impact energy and from the point of view of the compactness of the covering element 11.

In particular, the distances between the front pillar 6 and the inner surface 18 of the covering element 11 can be kept within contained limits, though having a relatively high level of absorbed energy during the impacts, thanks to the breaking of the ribs 17 that is facilitated by their reduction in thickness.

In addition, the adopted solution is extremely simple, as it has a low number of components and can be produced relatively easily and economically, since the skeleton 13 consists of a single piece and includes the parts (namely, the ribs 17) that are designed to absorb the impact.

Other advantages are then evident for a person skilled in the art based on the features disclosed above.

Finally, owing to the above, it is evident that the motor vehicle 1 described with reference to the accompanying drawings can be subjected to changes and variations, which do not go beyond the scope of protection of the invention, as set forth in the appended claims.

In particular, the shapes of the wall 15 and/or of the ribs 17 could be different from those indicated in the attached figures.

## Claims

1. Motor vehicle (1) comprising:
- a passenger compartment (2),
- a plurality of pillars (6), and
- for each said pillar (6), a respective covering element (11) having an external surface (14) delimiting said passenger compartment (2);
at least one of said covering elements (11) comprising a skeleton (13) defined by a single piece of polymeric material and comprising:
- a wall (15) having an inner surface (18) opposite said outer surface (14), facing towards the corresponding pillar (6) and spaced from said pillar so as to define a cavity (19);
- a plurality of ribs (17) projecting from said inner surface (18) towards the corresponding pillar (6);
wherein at least some of said ribs (17) comprise respective reduced thickness portions (20a-20h),
**characterized in that** said wall (15) and said ribs (17) are integral to one another so as to form said single piece, and each reduced thickness portion (20a-20h) has a thickness ranging from 25% to 75% with respect to a maximum thickness of the respective rib (17).

2. The motor vehicle according to claim 1, wherein said ribs (17) have respective end edges (22) spaced apart from said inner surface (18) and adjacent to the corresponding pillar (6), and wherein said reduced thickness portions (20e, 20h) are spaced apart from said inner surface (18).

3. The motor vehicle according to claim 2, wherein said reduced thickness portions (20e, 20h) end at said end edges (22) .

4. The motor vehicle according to claim 3, wherein said ribs (17) have a thickness that decreases along a direction that is substantially orthogonal to said inner surface (18) and to an outer surface of said pillar (6).

5. The motor vehicle according to claim 4, wherein the thickness of said ribs decreases starting from said inner surface (18).

6. The motor vehicle according to claim 4 or 5, wherein the thickness of said ribs (17) decreases in a progressive manner.

7. The motor vehicle according to claim 4 or 5, wherein said ribs (17) comprise respective greater thickness portions (23) arranged along said inner surface (18) and having a substantially constant thickness, which is greater than the thickness of said reduced thickness portions (20h).

8. The motor vehicle according to claim 7, wherein each rib (17) is defined by a corresponding said reduced thickness portion (20h) and by a corresponding said greater thickness portion (23).

9. The motor vehicle according to claim 1, wherein said reduced thickness portions (20a,20b,20c,20d) are provided with respective notches to define the thickness reduction.

10. The motor vehicle according to claim 9, wherein said notches are V-shaped.

11. The motor vehicle according to claim 9 or 10, wherein said reduced thickness portions (20a,20d,20f) are arranged at an area where said ribs (17) are attached to said inner surface (18).

12. The motor vehicle according to any one of the preceding claims, wherein said cavity (19) is exclusively engaged by said ribs (17).

13. The motor vehicle according to any one of the preceding claims, wherein said ribs (17) are flat and lie in respective planes which are substantially orthogonal to said wall (15).

14. The motor vehicle according to claim 13, wherein said planes are parallel to each other.

15. The motor vehicle according to claim 14, wherein said planes are orthogonal to an axis (7) of said pillar (6).
